# EUROPEAN PATENT SPECIFICATION

(11) **EP 2 677 436 B1**
(45) Date of publication and mention of the grant of the patent: **01.04.2015**
(21) Application number: 12746906.2
(22) Date of filing: 13.02.2012
(51) Int. Cl.: H04N 5/44

(54) **INFORMATION DISPLAY SYSTEM, INFORMATION DISPLAY CONTROL DEVICE, AND INFORMATION DISPLAY DEVICE**
INFORMATIONSANZEIGESYSTEM, INFORMATIONSANZEIGESTEUERVORRICHTUNG UND INFORMATIONSANZEIGEVORRICHTUNG
SYSTÈME D'AFFICHAGE D'INFORMATIONS, DISPOSITIF DE COMMANDE D'AFFICHAGE D'INFORMATIONS ET DISPOSITIF D'AFFICHAGE D'INFORMATIONS

(30) Priority: 15.02.2011 JP 2011030035
(43) Date of publication of application: 25.12.2013
(73) Proprietor: Panasonic Corporation, Osaka 571-8501 (JP)
(72) Inventor: NAKAGAWA, Seiichi, Osaka-shi Osaka 540-6207 (JP)
(74) Representative: Vigand, Philippe
(86) International application number: PCT/JP2012/000942
(87) International publication number: WO 2012/111305

(56) References cited:
- JP-A- 2000 023 150
- JP-A- 2001 346 270
- JP-A- 2006 229 926

## Description

### Technical Field

The present invention relates to an information display system including an information providing device having at least one or more functions of navigation and reproduction of AV contents to provide information and at least one or more information display devices which display the provided information.

### Background Art

Usually, a computer system is known in which a computer user is dynamically assigned to a remote computer resource to manage a network irrespective of a remote viewer protocol used by a user (for instance, see patent document 1).

Further, at present, car navigation devices or car AV devices are popularized which have a display unit such as a liquid crystal installed and used in a vehicle room and an input unit such as a touch panel in motor vehicles. In a part of these devices, for the purpose of easiness in installation, a plurality of information display devices having display units and information providing devices having information providing units may be occasionally configured respectively in separate forms and installed.

### Prior Art Document

### Patent document

Patent document 1: JP-T-2010-521761

### Summary of the Invention

### Problems to be Solved by the Invention

When the information display device and the information providing device are configured respectively in separate forms, there is a plurality of systems as a method for realizing a user interface. A first system thereof is a (remote UI) system that a script sent from the information providing device is executed in the information display device to realize the user interface. A second system is a (remote frame buffer) system that a display image sent from the information providing device is displayed in the information display device to realize the user interface. Usually, protocols respectively suitable for the devices are selected from a plurality of protocols for executing the systems respectively to realize the user interface.

However, in the usual method, a problem arises that when the information display device does not have the protocol corresponding to that stored in the information providing device, or when the corresponding protocol is already used, the information providing device cannot be connected to the information display device, so that the user interface cannot be realized.

The present invention is devised to solve the usual problem and it is an object of the present invention to provide an information display system in which even when an information display device does not have a protocol corresponding to that stored by an information providing device, or when the corresponding protocol is already used, the information providing device can be connected to the information display device.

### Means for Solving the Problems

In order to achieve the above-described object, the present invention provides an information display system mounted on a vehicle. The information display system includes a first information display device connected to an image providing device having a server portion which transmits a script describing display parts for realizing a user interface corresponding to functions of the device of its own and a display image of the user interface, and including a player portion that displays a display image formed by processing the script or the display image transmitted by the information providing device and a server portion that transmits the display image, a second information display device including a player portion which displays the display image transmitted by the information providing device or the first display device, and an information display control device that controls the information providing device, the first image display device and the second image display device. The image display controller includes a control portion which changes connections of the server portions and the player portions between the devices in accordance with the using states of the server portions and the player portions respectively provided in the information providing device, the first information display device and the second information display device.

### Advantageous Effects of the Invention

According to the present invention, even when the information display device does not have the protocol corresponding to the protocol stored by the information providing device, or even when the corresponding protocol is already used, the information providing device can be effectively connected to the information display device.

### Brief Description of the Drawings

[Fig. 1] Fig. 1 is a block diagram showing a structure of an information display system in an embodiment of the present invention.
[Fig. 2] Fig. 2 is a diagram showing contents of information stored in a database of the information display system in the embodiment of the present invention.
[Fig. 3] Fig. 3 is a flowchart for explaining an operation of the information display system in the embodiment of the present invention.

### Mode for Carrying Out the Invention

### (Embodiment)

Now, an information display system in an embodiment of the present invention will be described below by referring to the drawings.

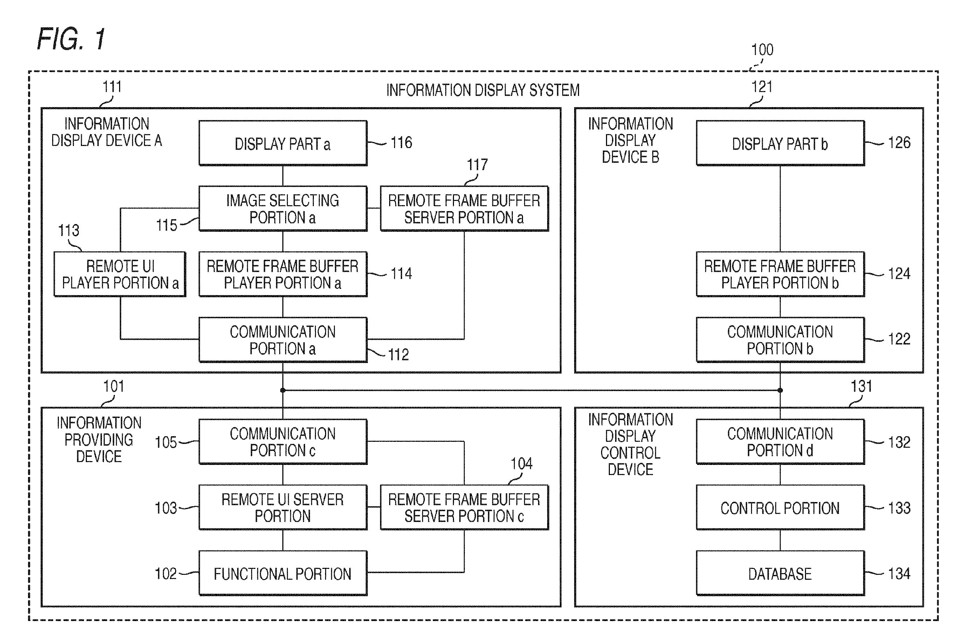

Fig. 1 is a block diagram showing the structure of the information display system in the embodiment of the present invention. The information display system 100 of the embodiment of the present invention includes an information providing device 101 having an information terminal device, an information display device A 111 as a first information display device, an information display device B 121 as a second information display device and an information display control device 131. The present embodiment shows an example of a case that the information display system is formed in, for instance, an indoor part of a motor vehicle.

The information providing device 101 has at least one or more functions such as navigation and reproduction of AV contents to provide information. The information providing device 101 includes, for instance, a navigation device having no display screen, a CD player device, a DVD player device, a BD player device, a TV tuner, a mobile telephone, a mobile terminal or the like.

The information display device A 111 and the information display device B 121 serve to display the information provided from the information providing device 101. The information display device A 111 and the information display device B 121 include, for instance, a navigation device (or system) having a display screen, a rear display device (or system), a mobile telephone, a smart phone, a tablet terminal, a portable audio device or the like.

Since the information providing device 101, the information display device A 111 and the information display device B 121 are configured respectively in separate forms, a degree of freedom in an installed position in the indoor side of the vehicle is advantageously obtained or any of them is easily taken outside the vehicle.

The information providing device 101 executes functions of the device of its own to communicate a user interface thereof in a plurality of protocols. The information providing device 101 includes a functional portion 102 which actually provides the functions of the device of its own, a remote UI server portion 103, a remote frame buffer server portion c104 and a communication portion c105. Here, the information providing device 101 includes the remote UI server portion 103 as a user interface server portion and the remote frame buffer server portion c 104 as a frame buffer server portion.

The functional portion 102 carries out the functions of the information providing device, and includes, for instance, a CPU (a processor) which executes a navigation function, a microcomputer having a memory such as a ROM, a RAM or the like and a communication unit such as a CD/DVD/BD deck, a TV tuner and a mobile telephone.

Even when the functional portion 102 is a general-purpose CPU to execute a program supplied from an external part, the functional portion can similarly carry out the above-described function. Further, even when the functional portion 102 communicates with an external device to control the external device, the functional portion can similarly carry out the above-described function.

The remote UI server portion 103 is a storage device such as a flash memory which accumulates at least one or more scripts forming display images displayed on the information display device A 111 and the information display device B 121 to control the functional portion 102. The remote UI server portion 103 provides the scripts to the communication portion c105 in accordance with requests from the information display device A 111 and the information display device B 121.

Even when the remote UI server portion 103 accumulates not only the scripts, but also data such as videos or images forming other display images, the remote UI server portion can similarly carry out the above-described functions.

Further, even when a non-volatile storage device such as an HDD or a volatile storage device such as a DRAM is used as the remote UI server portion 103, or even when a microcomputer having a CPU, a ROM, a RAM or the like is combined therewith to carry out a higher process, the remote UI server portion can similarly carry out the above-described functions.

The remote frame buffer server portion c104 is a microcomputer having, for instance, a CPU, a ROM, a RAM or the like which forms the display images displayed on the image display device A 111 and the image display device B 121 to provide the display images. The remote frame buffer server portion c104 controls the functional portion 102 to provide the display images to the communication portion c105 in accordance with requests from the information display device A 111 and the information display device B 121.

When the remote UI server portion 103 and the remote frame buffer server portion 104c are mounted by software and operated by the same CPU, the remote UI server portion and the remote frame buffer server portion can similarly carry out the above-described functions.

The communication portion c105 receives the scripts sent from the remote UI server portion 103 or the display images sent from the remote frame buffer server portion c104 and transmits the scripts or the display images to the information display device A 111 or the information display device B 121. The communication portion c105 is, for instance, an Ethernet (a registered trademark) controller.

Further, as for a communication system of the communication portion c105, as long as the scripts or the display images can be sent to the information display device A 111 or the information display device B 121, even other wired communication system such as a start/stop communication system or a wireless communication system such as IEEE802.11b can be similarly carried out.

Otherwise, as for a communication function of the communication portion c105, the communication portion may communicate not only the scripts or the display images, but also other videos or images, or may communicate information of other use than the present invention to the information display device A 111 or the information display device B 121 or other device except it or may carry out a bidirectional communication.

The information display device A 111 receives the information from the information providing device 101 in the plurality of protocols and retransmits the information in an arbitrary protocol. The information display device A 111 includes a communication portion a112, a remote UI player portion a113, a remote frame buffer player portion a114, an image selecting portion a115, a display part a116 and a remote frame buffer server portion a117. Here, the information display device A 111 includes the remote UI player portion a113 and the remote frame buffer player portion a114 as a player portion and the remote frame buffer server portion a117 as a server portion.

The communication portion a112 receives the scripts or the display images transmitted from the information providing device 101 to send the received information to the remote UI player portion a113 or the remote frame buffer player portion a114 in accordance with the protocol. Further, the communication portion a112 transmits the display image received from the remote frame buffer server portion a117 to the information display device B 121. Further, the communication portion a112 sends an instruction from the information display control device 131 to the remote UI player portion a113, the remote frame buffer player portion a114 and the remote frame buffer server portion a117. The communication portion a112 is, for instance, the Ethernet (the registered trademark) controller.

Further, as for a communication system of the communication portion a112, as long as the above-described transmission and reception can be carried out, even other wired communication system such as a start/stop communication system or a wireless communication system such as IEEE802.11b can be likewise carried out.

Otherwise, as a communication function of the communication portion a112, the communication portion carries out not only the above-described transmission and reception, but also may receive other videos or images or receive information of other use than the present invention from the information providing device 101 or other device than the information providing device 101.

The remote UI player portion a113 interprets the script received from the communication portion a112 to form an image to be displayed on the display part a116 and sends the image to the image selecting portion a115. The remote UI player portion a113 is a microcomputer having, for instance, a CPU, a ROM, a RAM or the like. For instance, in this case, the CPU executes a computer program stored in the ROM by using the RAM as an operating area to realize the above-described operation.

The remote frame buffer player portion a114 processes the display image received from the communication portion a112 to form the image to be displayed on the display part a116 and sends the image to the image selecting portion a115. The remote frame buffer player portion a114 is a microcomputer having, for instance, a CPU, a ROM, a RAM or the like. For instance, in this case, the CPU executes a computer program stored in the ROM by using the RAM as an operating area to realize the above-described operation.

The image selecting portion a115 selects the images sent from the remote UI player portion a113 and the remote frame buffer player portion a114 and sends the image to the display part a116 or the remote frame buffer server portion a117. The image selecting portion a115 is, for instance, a switch. The image selecting portion a115 may have other image input source than the remote UI player portion a113 and the remote frame buffer player portion a114 or other image output end than the display part a116 and the remote frame buffer server portion a117. Further, even when the image selecting portion a115 has a combining function for combining together a plurality of input images to send the combined image to the output end, the image selecting portion can likewise carry out the above-described functions.

The display part a116 serves to display the image sent from the image selecting portion a115 and is, for instance a display such as a liquid crystal monitor.

Further, the display part a116 may be used to display an image sent from other part than the image selecting portion a115. Further, even when the display part a116 outputs an audio as a speaker, the display part a116 can similarly carry out the above-described function.

The remote frame buffer server portion a117 provides the display image to be displayed on the information display device B 121, and is a microcomputer having, for instance, a CPU, a ROM, a RAM or the like. The remote frame buffer server portion a117 provides the display image sent from the image selecting portion a115 to the communication portion a112 in accordance with a request from the information display device B 121. The information display device A 111 may have a remote UI server portion.

When the remote UI player portion a113, the remote frame buffer player portion a114 and the remote frame buffer server portion a117 are mounted by software and operated by the same CPU, the remote UI player portion a113, the remote frame buffer player portion a114 and the remote frame buffer server portion a117 can similarly carry out the above-described functions.

The information display device B 121 displays the information transmitted from the information providing device 101 or the information display device A 111. The information display device B 121 includes a communication portion b122, a remote frame buffer player portion b124 and a display part b126. The information display device B 121 includes the remote frame buffer player portion b124 as a player portion.

The communication portion b122 receives the scripts or the display images transmitted from the information providing device 101 and the information display device A 111 to send the received information to the remote frame buffer player portion b124 in accordance with the protocol. Further, the communication portion b122 sends an instruction from the information display control device 131 to the remote frame buffer player portion b124. The communication portion b122 is, for instance, the Ethernet (the registered trademark) controller.

Further, as for a communication system of the communication portion b122, as long as the above-described transmission and reception can be carried out, even other wired communication system such as a start/stop communication system or a wireless communication system such as IEEE802.11b can be similarly carried out.

Otherwise, as a communication function of the communication portion b122, the communication portion carries out not only the above-described transmission and reception, but also may receive other videos or images or receive information of other use than the present invention from the information providing device 101 or other device than the information providing device 101.

The remote frame buffer player portion b124 processes the display image received from the communication portion b122 to form an image to be displayed on the display part b126 and sends the image to the image display part b126. The remote frame buffer player portion b124 is a microcomputer having, for instance, a CPU, a ROM, a RAM or the like. For instance, in this case, the CPU executes a computer program stored in the ROM by using the RAM as an operating area to realize the above-described operation. The information display device B121 may have a remote UI player portion.

The display part b126 serves to display the image sent from the remote frame buffer player portion b124 and is, for instance, a display such as a liquid crystal monitor.

Further, the display part b126 may be used to display an image sent from other part than the remote frame buffer player portion b124. Further, even when the display part b126 outputs an audio as a speaker, the display part b126 can similarly carry out the above-described function.

The information display control device 131 manages the using states of the server portions and the player portions of the devices respectively to control connections between the devices. The information display control device 131 includes a communication portion d132, a control portion 133 and a database 134 as a storing portion.

The communication portion d132 sends an instruction from the control portion 133 to the information display device A 111 and the information display device B 121. The communication portion d132 is, for instance, the Ethernet (the registered trademark) controller.

Further, as for a communication system of the communication portion d132, as long as the above-described transmission can be carried out, even other wired communication system such as a start/stop communication system or a wireless communication system such as IEEE802.11b can be similarly carried out.

Otherwise, as a communication function of the communication portion d132, the communication portion may communicate not only the instruction to the information display device A 111 and the information display device B 121, but also other videos or images, or may communicate information of other use than the present invention to the information display device A 111, the information display device B 121 or other device than the information display device A or B or may carry out a bidirectional communication.

The control portion 133 searches contents of the database 134 and refers thereto to instruct a connection end to the information display device A 111 and the information display device B 121 through the communication portion d132. The control portion 133 is a microcomputer having, for instance, a CPU, a ROM, a RAM or the like. For instance, in this case, the CPU executes a computer program stored in the ROM by using the RAM as an operating area to realize the above-described operations.

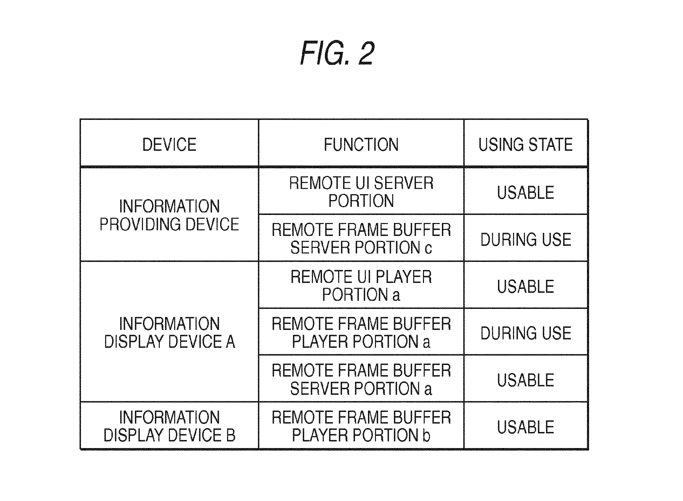

As shown in Fig. 2, the database 134 is a storage device such as a flash memory which stores a list of server functions and player functions of the protocols respectively provided in the information providing device 101, the information display device A 111 and the information display device B 121 and the using states thereof (use permission or inhibition states). Namely, the database 134 stores information respectively of the using states of the server portions and the player portions of the devices. Further, the database 134 provides the holding information respectively of the devices, the functions and the using states to the control portion 133 and can change the information from the control portion 133.

Even when a non-volatile storage device such as an HDD or a volatile storage device such as a DRAM is used as the database 134, or even when a microcomputer having a CPU, a ROM, a RAM or the like is combined therewith to carry out a higher process, the database can similarly carry out the above-described functions.

The control portion 133 and the database 134 included in the information display control device 131 do not need to be formed as separate bodies from the information providing device 101, the information display device A 111 and the information display device B 121. For instance, the information providing device 101 may include the control 133 and the database 134 and the communication portion d132 may be the same as the communication portion c105.

A processing operation of the display system formed as described above will be described below.

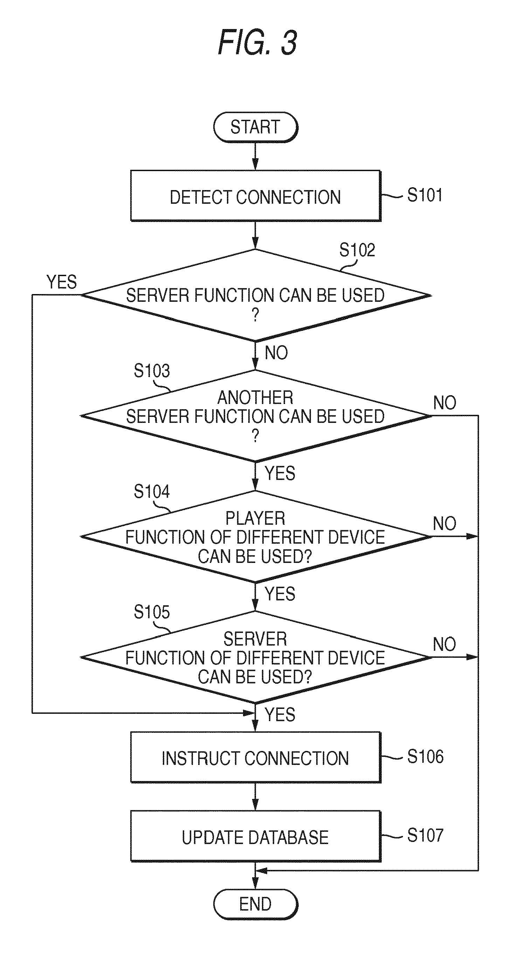

Fig. 3 is a flowchart of a control process carried out by the control portion 133 forming the information display system in the embodiment of the present invention.

Initially, in an initial state, the information providing device 101, the information display device A 111 and the information display control device 131 are supposed to be connected together, and the information display device B 121 is not supposed to be connected. At this time, the database 134 has the contents shown in Fig. 2.

Under this state, when the information display device B 121 is connected, the control portion 133 carries out the process of the flowchart shown in Fig. 3.

Firstly, in step S101, when the device is newly connected to the information display system, the control portion 133 detects that the device connected to the device of its own is the information display device B 121 through the communication portion d132.

Then, the control portions 133 decides whether or not the server function of the information providing device 101 having the same protocol as that of the player function of the information display device B 121 which is connected this time can be used (step S102). When the server function can be used (YES in the step S102), the control portion 133 instructs the server function (the remote frame buffer server portion a117) of the information providing device 101 to be connected to the player function (the remote frame buffer player portion b124) of the information display device B 121 through the communication portion d132 (S106). Then, the control portion 133 updates corresponding items of the database 134 to during using (step S107) to finish the process.

In the example of this time, according to the database 134, the player function of the information display device B 121 is a remote frame buffer player function. However, since a remote frame buffer server function of the information providing device 101 is in use, the control portion 133 decides NO in the step 102 to advance to step S103.

In the step S103, the control portion 133 decides whether or not the information providing device 101 or other device (the information display device A 111) has other usable server function. Here, when there is no usable server function, the control portion 133 decides that the information display device B 121 cannot be connected to the information providing device 101 to finish the process (NO in the step S103).

In the example of this time, according to the database 134, since a remote frame buffer server function of the information display device A 111 is usable, the control portion 133 decides YES in the step 103 to advance to step S104.

In the step S104, the control portion 133 decides whether or not the device having the usable server function in the step S103 has a usable player function. Here, when there is no usable player function, the control portion 133 decides that the information display device B 121 cannot be connected to the information providing device 101 to finish the process (NO in the step S104).

In the example of this time, according to the database 134, a remote frame buffer player function of the information display device A 111 is in use, however, a remote UI player function is usable. Accordingly, the control portion 133 decides YES in the step S104 to advance to step S105.

In the step S105, the control portion 133 decides whether or not the server function of the information providing device 101 having the same protocol as that of the usable player function in the step S104 can be used. When the server function cannot be used, the control portion 133 decides that the information display device B 121 cannot be connected to the information providing device 101 to finish the process (NO in the step S105).

In the example of this time, according to the database 134, since a remote UI server function of the information providing device 101 can be used, the control portion 133 decides YES in the step S105. Then, the control portion 133 instructs the remote frame buffer server portion a117 to be connected to the remote frame buffer player portion b124, and the remote UI server portion 103 to be connected to the remote UI player portion a113 through the communication portion d132 (step S106). Then, the control portion 133 updates corresponding items during using (step S107) and then finishes the process.

As described above, in the present embodiment, the information providing device 101 is provided which includes the functional portion 102, the remote UI server portion 103, the remote frame buffer server portion c104 and the communication portion c105. Further, the information display device A 111 is provided which includes the communication portion a112, the remote UI player portion a113, the remote frame buffer player portion a114, the image selecting portion a115, the display part a116 and the remote frame buffer server portion a117. Further, the information display device B 121 is provided which includes the communication portion b122, the remote frame buffer player portion b124 and the display part b126. Further, the information display control device 131 is provided which includes the communication portion d132, the control portion 133 and the database 134. According to the information display system having these devices, the information display device B 121 can be connected to the information providing device 101 through the information display device A 111 to realize the user interface.

At this time, in accordance with the using states of the server functions and the player functions respectively provided in the devices, the connections of the server functions and the player functions between the devices can be dynamically changed and a connection can be achieved which meets the server function and the player function having a usable protocol. Namely, in accordance with the states of the devices of the information display system, when the information providing device is connected to the information display device so as to be adapted thereto, the user interface provided by the information providing device can be realized in the information display device.

Thus, according to the present embodiment, since the database is provided which manages the server functions and the player functions, the devices that cannot be simply connected can be connected to each other and the user interface which meets the device as an object to be connected can be realized.

For instance, a case is assumed that the information display system of the present embodiment is formed in an interior of a motor vehicle, the information display control device is provided in the interior of the motor vehicle and an information terminal device such as a mobile terminal is carried and used as the information providing device or the information display device. In this case, in order to connect the information terminal device to other information providing device or information display device, the information terminal device is detected by the information display control device to decide the using states (the use permission or inhibition states) of the server functions and the player functions between the devices to be connected. In accordance with the decided result, both the devices are connected together by using the server functions and the player functions of the usable devices (the device of its own or other device) to realize the user interface. By such an operation of the present embodiment, the information terminal device carried to the interior of the motor vehicle can be normally operated, information provided by the information terminal device can be displayed on the information display device in the vehicle or information from the information providing device in the vehicle can be displayed on the information terminal device.

As described above, in the present embodiment, especially when a mobile electronic device is used as a portable device and connected to other device previously set in the vehicle, an outstanding effect is obtained. Further, according to the present embodiment, a portable device whose connecting method is merely partly provided or devices of different generations may be connected.

Various forms of the embodiment according to the present invention include below-described structures are included.
In an information display system mounted on a vehicle, the information display system including a first information display device connected to an information providing device having a server portion which transmits a script describing display parts for realizing a user interface corresponding to functions of the device of its own or a display image of the user interface, and having a player portion which displays a display image formed by processing the script or the display image transmitted by the information providing device and a server portion which transmits the display image, a second information display device having a player portion which displays the display image transmitted by the information providing device or the first information display device and an information display control device which controls the information providing device, the first information display device and the second information display device, wherein the information display control device has a control portion which changes connections of the server portions and the player portions between the devices respectively in accordance with using states of the server portions and the player portions respectively provided in the information providing device, the first information display device and the second information display device.

According to the above-described structure, the connection meeting the server portion and the player portion of the usable protocol can be achieved in accordance with the using states of the server portions and the player portions respectively provided in the devices. Accordingly, even when the information display device does not have the protocol corresponding to that stored by the information providing device, or even when the corresponding protocol is already used, the information providing device can be connected to the information display device.

In the above-described information display system, the information display control device has a storing portion which stores information of the using states of the server portions and the player portions, and the control portion refers to the information of the using states and instructs the server portion of the information providing device to be connected to the player portion of the first information display device or the second information display device in accordance with the using states of the server portions and the player portions of protocols that can be used respectively in the information providing device, the first information display device and the second information display device.

In an information display control device which controls a connection between an information providing device and an information display device in an information display system mounted on a vehicle, the information display control device including a storing portion which stores information of using states of server portions provided in the information providing device or the information display device to transmit a script describing display parts for realizing a user interface corresponding to functions of the device or a display image of the user interface and player portions provided in the information display device to display a display image formed by processing the script or the display image and a control portion which refers to the information of the using states and instructs the server portion of the information providing device to be connected to the player portion of the information display device in accordance with the using states of the server portions and the player portions of protocols that can be used respectively in the information providing device and the information display device.

In the above-described information display control device, the storing portion stores the information of the using states of the server portions of the information providing device, the player portions and the server portion of the first information display device and the player portion of the second information display device in the information display device, when the server portion and the player portion do not exist which can be directly connected together under the protocol that can be used respectively in the server portions of the information providing device and the player portion of the second information display device, the control portion instructs a connection to be carried out through the player portions and the server portion of the first information display device.

In an information display device which displays information provided from an information providing device in an information display system mounted on a vehicle, the information display device including a player portion having at least one of a user interface player portion which displays a display image formed by processing a script describing display parts for realizing a user interface corresponding to functions of the information providing device and a frame buffer player portion which displays a display image of the user interface as a player portion which displays the display image of the information transmitted by the information providing device, a server portion having at least one of a user interface server portion which transmits the display image formed by processing the script and a frame buffer server portion which transmits the display image of the user interface as a server portion which transmits the display image and a communication portion which changes connections of the player portion and the server portion, the information providing device and other information display device to make a communication in accordance with an instruction from an information display control device.

In an information display device which displays information provided from an information providing device in an information display system mounted on a vehicle, the information display device including a player portion having at least one of a user interface player portion which displays a display image formed by processing a script describing display parts for realizing a user interface corresponding to functions of the information providing device and a frame buffer player portion which displays a display image of the user interface as a player portion which displays the display image of the information transmitted by the information providing device and a communication portion which changes connections of the player portion and the information providing device and other information display device to make a communication in accordance with an instruction from an information display control device.

In an information providing device which provides information to an information display device in an information display system mounted on a vehicle, the information providing device including a server portion having at least one of a user interface server portion which transmits a script describing display parts for realizing a user interface corresponding to functions of the device of its own and a frame buffer server portion which transmits a display image of the user interface and a communication portion which allows the server portion to be connected to the information display device to make a communication in accordance with an instruction from an information display control device.

### Industrial Applicability

The present invention is available for the information display system or the like which includes at leas one or more information display devices connected to the information providing device having at least one or more functions of navigation and reproduction of AV contents to provide information and displaying the provided information. For instance, the present invention is available for the information display system in a system mounted on a vehicle such as a car navigation device or a car AV device in which the information display device can be carried outside the vehicle or a system mounted on the vehicle in which a portable device such as the information terminal device carried to the vehicle is connected to a device mounted on the vehicle.

### Description of Reference Numerals and Signs

- 100: information display system
- 101: information providing device
- 102: functional portion
- 103: remote UI server portion
- 104: remote frame buffer server portion c
- 105: communication portion c
- 111: information display device A
- 112: communication portion a
- 113: remote UI player portion a
- 114: remote frame buffer player portion a
- 115: image selecting portion a
- 116: display part a
- 117: remote frame buffer server portion a
- 121: .information display device B
- 122: communication portion b
- 124: remote frame buffer player portion b
- 126: display part b
- 131: information display control device
- 132: communication portion d
- 133: control portion
- 134: database

## Claims

1. An information display control device which controls a connection between an information providing device and an information display device in an information display system mounted on a vehicle, the information display control device comprising:
a storing portion that stores information of a using state of a server portion provided in the information providing device or the information display device to transmit a script describing display parts for realizing a user interface corresponding to functions of the device or a display image of the user interface and information of using states of player portions provided in the information display device to display a display image formed by processing the script or the display image; and
a control portion that refers to the information of the using states and instructs for connecting the server portion of the information providing device to the player portion of the information display device in accordance with the using states, of the server portion and the player portions, of protocols being usable respectively in the information providing device and the information display device.

2. The information display control device according to claim 1, wherein the storing portion stores the information of the using states of the server portions of the information providing device, the player portion and the server portion of a first information display device and the player portion of a second information display device in the information display device; and
wherein when there are no server portion and player portion of protocols being directly usable respectively and directly connected together in the server portions of the information providing device and the player portion of the second information display device, the control portion instructs a connection through the player portion and the server portion of the first information display device.

3. An information display device which displays information provided from an information providing device in an information display system mounted on a vehicle, the information display device comprising:
a player portion that includes at least one of a user interface player portion which displays a display image formed by processing a script describing display parts for realizing a user interface corresponding to functions of the information providing device and a frame buffer player portion which displays a display image of the user interface, as a player portion which displays the display image of the information transmitted by the information providing device;
a server portion that includes at least one of a user interface server portion which transmits the display image formed by processing the script and a frame buffer server portion which transmits the display image of the user interface, as a server portion which transmits the display image; and
a communication portion that changes connections of the player portion and the server portion, the information providing device and other information display device in response to an instruction from an information display control device to make a communication.

4. An information display system mounted on a vehicle, the information display system comprising:
a first information display device that is an information display device according to claim 3 and that is connected to an information providing device, the server portion operable to transmits a script describing display parts for realizing a user interface corresponding to functions of the device of its own or a display image of the user interface, and the player portion operable to displays a display image formed by processing the script or the display image transmitted by the information providing device and a server portion which transmits the display image;
a second information display device that is an information display device according to claim 3 and that includes a player portion which displays the display image transmitted by the information providing device or the first information display device; and
an information display control device according to claim 1 that controls the information providing device, the first information display device, and the second information display device,
wherein the control portion of the information display control device changes connections of the server portions and the player portions between the devices respectively in accordance with using states of the server portions and the player portions respectively provided in the information providing device, the first information display device, and the second information display device.

5. The information display system according to claim 4, wherein the information display control device includes a storing portion that stores information of the using states of the server portions and the player portions;
wherein the control portion refers to the information of the using states and instructs for connecting the server portion of the information providing device to the player portion of the first information display device or the player portion of the second information display device in accordance with the using states of the server portions and the player portions of protocols being usable respectively in the information providing device, the first information display device, and the second information display device.

## Patentansprüche

1. Informationsanzeigesteuervorrichtung, die eine Verbindung zwischen einer Information bereitstellenden Vorrichtung und einer Informationsanzeigevorrichtung in einem bei einem Fahrzeug angebauten Informationsanzeigesystem steuert, wobei die Informationsanzeigesteuervorrichtung Folgendes aufweist:
einen Speicherteil, der Information über einen Anwendungsstatus eines Serverteils, der in der Information bereitstellenden Vorrichtung der Informationsanzeigevorrichtung bereitgestellt ist, um ein Script zu übertragen, das Anzeigeteile zum Realisieren einer Anwenderschnittstelle, die Funktionen der Vorrichtung oder ein Anzeigebild der Anwenderschnittstelle und Information über Status von Abspielerteilen, die in der Informationsanzeigevorrichtung zum Anzeigen eines durch Bearbeitung des Scripts oder des Anzeigebildes geformten Anzeigebildes beschreibt, überträgt; und
einen Steuerteil, der Bezug nimmt auf die Information über die Anwendungsstatus und zum Verbinden des Serverteils der die Information bereitstellenden Vorrichtung mit dem Abspielerteil der Informationsanzeigevorrichtung in Übereinstimmung mit den Anwendungsstatus des Serverteils beziehungsweise der Abspielerstatus von anwendbaren Protokollen in der Information bereitstellenden Vorrichtung und der Informationsanzeigevorrichtung anweist.

2. Informationsanzeigesteuervorrichtung nach Anspruch 1, wobei der Speicherteil die Information über die Anwenderstatus der Serverteile der Information bereitstellenden Vorrichtung, des Abspielerteils und des Serverteils einer ersten Informationsanzeigevorrichtung und des Abspielerteils einer zweiten Informationsanzeigevorrichtung in der Informationsanzeigevorrichtung speichert; und
wobei, wenn kein Serverteil beziehungsweise Abspielerteil von Protokollen direkt anwendbar und direkt in den Serverteilen der Information bereitstellenden Vorrichtung und dem Abspielerteil der zweiten Informationsanzeigevorrichtung miteinander verbunden sind, der Steuerteil eine Verbindung durch den Abspielerteil und den Serverteil der ersten Informationsanzeigevorrichtung anweist.

3. Informationsanzeigevorrichtung, die von einer Information bereitstellenden Vorrichtung in einem bei einem Fahrzeug angebauten Informationsanzeigesystem bereitgestellte Information anzeigt, wobei die Informationsanzeigevorrichtung Folgendes aufweist:
einen Abspielerteil, umfassend mindestens einen von einem Anwenderschnittstellen-Abspielerteil, der ein durch Bearbeiten eines Scripts, das Anzeigeteile zur Realisierung einer Funktionen der Information bereitstellenden Vorrichtung entsprechende Anwenderschnittstelle beschreibt, geformtes Anzeigebild anzeigt, und einen Framepuffer-Abspielerteil, der ein Anzeigebild der Anwenderschnittstelle als einen Abspielerteil zeigt, der das Anzeigebild der von der Information bereitstellenden Vorrichtung übertragenen Information anzeigt;
einen Serverteil, umfassend mindestens einen von einem Anwenderschnittstellen-Serverteil, der ein durch Bearbeiten des Scripts geformten Anzeigebilds überträgt, und einen Framepuffer-Serverteil, der das Anzeigebild der Anwenderschnittstelle als ein Serverteil, der das Anzeigebild überträgt; und
einen Kommunikationsteil der Verbindungen des Abspielerteils und des Serverteils, der Information bereitstellenden Vorrichtung und anderen Informationsanzeigevorrichtung als Reaktion auf eine Anweisung von einer Informationsanzeigesteuervorrichtung zur Herstellung einer Kommunikation ändert.

4. Informationsanzeigesystem, das bei einem Fahrzeug angebaut ist, wobei das Informationsanzeigesystem Folgendes aufweist:
eine erste Informationsanzeigevorrichtung, die eine Informationsanzeigevorrichtung nach Anspruch 3 ist und verbunden ist mit einer Information bereitstellenden Vorrichtung, die operabel ist zum Übertragen eines Anzeigeteile zur Realisierung einer Anwenderschnittstelle, die Funktionen der Vorrichtung selbst oder einem Anzeigebild der Anwenderschnittstelle entspricht, beschreibenden Scripts, und der Abspielerteil operabel ist für ein Anzeigen eines durch Bearbeiten des Scripts geformten Anzeigebildes oder des von der Information bereitstellenden Vorrichtung und einem das Anzeigebild übertragenden Serverteil übertragenen Anzeigebildes;
eine zweite Informationsanzeigevorrichtung, die eine Informationsanzeigevorrichtung nach Anspruch 3 ist, und die einen Abspielteil umfasst, der das von der Information bereitstellenden Vorrichtung oder von der ersten Informationsanzeigevorrichtung übertragene Anzeigebild anzeigt; und
eine Informationsanzeigesteuervorrichtung nach Anspruch 1, die die Information bereitstellende Vorrichtung, die erste Informationsanzeigevorrichtung und die zweite Informationsanzeigevorrichtung steuert,
wobei der Steuerteil der Informationsanzeigesteuervorrichtung Verbindungen der Serverteile und der Abspielerteile zwischen den jeweiligen Vorrichtungen in Übereinstimmung mit den Anwendungsstatus der in der Information bereitstellenden Vorrichtung, der ersten Informationsanzeigevorrichtung und der zweiten Informationsanzeigevorrichtung bereitgestellten Serverteilen und den Abspielerteilen ändert.

5. Informationsanzeigesystem nach Anspruch 4, wobei die Informationsanzeigesteuervorrichtung einen Speicherteil umfasst, der Information über die Anwendungsstatus der Serverteile und der Abspielerteile speichert;
wobei der Steuerteil auf die Information über die Anwendungsstatus Bezug nimmt und ein Verbinden des Serverteils der Information bereitstellenden Vorrichtung mit dem Abspielerteil der ersten Informationsanzeigevorrichtung oder dem Abspielerteil der zweiten Informationsanzeigevorrichtung in Übereinstimmung mit den Anwenderstatus der Serverteile beziehungsweise der Abspielerteile von anwendbaren Protokollen in der Information bereitstellenden Vorrichtung, der ersten Informationsanzeigevorrichtung und der zweiten Informationsanzeigevorrichtung anweist.

## Revendications

1. Dispositif de commande d'affichage d'informations qui commande une connexion entre un dispositif de fourniture d'informations et un dispositif d'affichage d'informations dans un système d'affichage d'informations monté sur un véhicule, le dispositif de commande d'affichage d'informations comprenant :
une partie de stockage qui stocke des informations d'état d'utilisation d'une partie de serveur prévue dans le dispositif de fourniture d'informations ou le dispositif d'affichage d'informations pour transmettre un script décrivant des parties d'affichage pour réaliser une interface utilisateur correspondant à des fonctions du dispositif ou une image d'affichage de l'interface utilisateur et des informations d'états d'utilisation de parties de lecteur prévues dans le dispositif d'affichage d'informations pour afficher une image d'affichage formée par traitement du script ou de l'image d'affichage ; et
une partie de commande qui se réfère aux informations des états d'utilisation et donne une instruction pour connecter la partie de serveur du dispositif de fourniture d'informations à la partie de lecteur du dispositif d'affichage d'informations conformément aux états d'utilisation de la partie de serveur et des parties de lecteur de protocoles étant utilisables respectivement dans le dispositif de fourniture d'informations et le dispositif d'affichage d'informations.

2. Dispositif de commande d'affichage d'informations selon la revendication 1, dans lequel la partie de stockage stocke les informations des états d'utilisation des parties de serveur du dispositif de fourniture d'informations, de la partie de lecteur et de la partie de serveur d'un premier dispositif d'affichage d'informations et de la partie de lecteur d'un deuxième dispositif d'affichage d'informations dans le dispositif d'affichage d'informations ; et
dans lequel lorsqu'il n'y a pas de partie de serveur et de partie de lecteur de protocoles étant directement utilisables respectivement et directement connectées ensemble dans les parties de serveur du dispositif de fourniture d'informations et la partie de lecteur du deuxième dispositif d'affichage d'informations, la partie de commande donne une instruction d'une connexion à travers la partie de lecteur et la partie de serveur du premier dispositif d'affichage d'informations.

3. Dispositif d'affichage d'informations qui affiche des informations fournies à partir d'un dispositif de fourniture d'informations dans un système d'affichage d'informations monté sur un véhicule, le dispositif d'affichage d'informations comprenant :
une partie de lecteur qui comporte au moins l'une d'une partie de lecteur d'interface utilisateur qui affiche une image d'affichage formée par traitement d'un script décrivant des parties d'affichage pour réaliser une interface utilisateur correspondant à des fonctions du dispositif de fourniture d'informations et d'une partie de lecteur de mémoire tampon de trame qui affiche une image d'affichage de l'interface utilisateur, en tant que partie de lecteur qui affiche l'image d'affichage des informations transmises par le dispositif de fourniture d'informations ;
une partie de serveur qui comporte au moins l'une d'une partie de serveur d'interface utilisateur qui transmet l'image d'affichage formée par traitement du script et d'une partie de serveur de mémoire tampon de trame qui transmet l'image d'affichage de l'interface utilisateur, en tant que partie de serveur qui transmet l'image d'affichage ; et
une partie de communication qui change des connexions de la partie de lecteur et de la partie de serveur, du dispositif de fourniture d'informations et d'un autre dispositif d'affichage informations en réponse à une instruction provenant d'un dispositif de commande d'affichage d'informations pour faire une communication.

4. Système d'affichage d'informations monté sur un véhicule, le système d'affichage d'informations comprenant :
un premier dispositif d'affichage d'informations qui est un dispositif d'affichage d'informations selon la revendication 3 et qui est connecté à un dispositif de fourniture d'informations, la partie de serveur pouvant fonctionner pour transmettre un script décrivant des parties d'affichage pour réaliser une interface utilisateur correspondant à des fonctions du dispositif lui-même ou une image d'affichage de l'interface utilisateur, et la partie de lecteur pouvant fonctionner pour afficher une image d'affichage formée par traitement du script ou de l'image d'affichage transmise par le dispositif de fourniture d'informations et une partie de serveur qui transmet l'image d'affichage ;
un deuxième dispositif d'affichage d'informations qui est un dispositif d'affichage d'informations selon la revendication 3 et qui comporte une partie de lecteur qui affiche l'image d'affichage transmise par le dispositif de fourniture d'informations ou le premier dispositif d'affichage d'informations ; et
un dispositif de commande d'affichage d'informations selon la revendication 1 qui commande le dispositif de fourniture d'informations, le premier dispositif d'affichage d'informations, et le deuxième dispositif d'affichage d'informations,
dans lequel la partie de commande du dispositif de commande d'affichage d'informations change des connexions des parties de serveur et des parties de lecteur entre les dispositifs respectivement conformément à des états d'utilisation des parties de serveur et des parties de lecteur respectivement prévues dans le dispositif de fourniture d'informations, le premier dispositif d'affichage d'informations, et le deuxième dispositif d'affichage d'informations.

5. Système d'affichage d'informations selon la revendication 4, dans lequel le dispositif de commande d'affichage d'informations comporte une partie de stockage qui stocke des informations des états d'utilisation des parties de serveur et des parties de lecteur ;
dans lequel la partie de commande se réfère aux informations des états d'utilisation et donne une instruction pour connecter la partie de serveur du dispositif de fourniture d'informations à la partie de lecteur du premier dispositif d'affichage d'informations ou à la partie de lecteur du deuxième dispositif d'affichage d'informations conformément aux états d'utilisation des parties de serveur et des parties de lecteur de protocoles étant utilisables respectivement dans le dispositif de fourniture d'informations, le premier dispositif d'affichage d'informations, et le deuxième dispositif d'affichage d'informations.
